# EUROPÄISCHE PATENTSCHRIFT

(11) **EP 2 575 385 B1**
(45) Veröffentlichungstag und Bekanntmachung des Hinweises auf die Patenterteilung: **06.05.2020**
(21) Anmeldenummer: 12184946.7
(22) Anmeldetag: 19.09.2012
(51) Int. Cl.: G06Q 30/06, H04W 8/26

(54) **Verfahren zur Initialisierung und/oder Aktivierung wenigstens eines Nutzerkontos, zum Durchführen einer Transaktion, sowie Endgerät**
Method for initializing and/or activation of at least one user account, for carrying out a transaction, and terminal
Procédé d'initialisation et/ou d'activation d'au moins un compte d'utilisateur, de réalisation d'une transaction, ainsi que terminal

(30) Priorität: 27.09.2011 DE 102011115154
(43) Veröffentlichungstag der Anmeldung: 03.04.2013
(73) Patentinhaber: Vodafone GmbH, 40549 Düsseldorf (DE)
(72) Erfinder: Römer, Arno, 40229 Düsseldorf (DE); Hengels, Erik, 13055 Berlin (DE)
(74) Vertreter: Müller & Schubert

(56) Entgegenhaltungen:
- WO-A2-2008/141947
- US-A1- 2004 076 128
- US-A1- 2009 279 682
- US-A1- 2010 167 734

## Beschreibung

Die vorliegende Erfindung betrifft zunächst ein Verfahren zur Initialisierung und/oder Aktivierung wenigstens eines Nutzerkontos und/oder einer Nutzeridentifikationskennung bei wenigstens einem Anbieter gemäß dem Oberbegriff von Patentanspruch 1. Weiterhin betrifft die Erfindung ein Verfahren zum Durchführen einer Transaktion zwischen einem, einem Nutzer zugeordneten Endgerät und einem Anbieter gemäß dem Oberbegriff von Patentanspruch 11. Schließlich betrifft die Erfindung auch ein Endgerät, welches einem ersten Kommunikationsnetz, insbesondere einem Mobilfunknetz, zugeordnet ist und eine Kommunikationsverbindung auch zu einem zweiten, zum ersten Kommunikationsnetz unterschiedlichen Kommunikationsnetz aufbauen kann.

Mit zunehmender Entwicklung mobiler Endgeräte, wie beispielsweise Mobiltelefonen, Smartphones und dergleichen steigt auch die Bandbreite für deren Einsatzmöglichkeiten. So ist es heutzutage bereits gang und gäbe, dass mittels Mobiltelefonen auch Transaktionen jeglicher Art zwischen dem Nutzer eines solchen Endgeräts und einem Anbieter durchgeführt werden können. Dabei ist es für den Anbieter unerlässlich, gesicherte Informationen über den Nutzer, der die Transaktion durchführen möchte, zu erhalten, da bei Transaktionen nicht selten auch Bezahlvorgänge mit eingebunden sind.

In der WO 2004/057547 A1 beispielsweise ist eine Lösung beschrieben, bei der in einem mobilen Endgerät eine digitale Signatur abgelegt wird. Die digitale Signatur wird verschlüsselt und an den Anbieter übertragen. Der Anbieter übertragt die verschlüsselte Signatur an den Betreiber des Kommunikationsnetzes, dem das mobile Endgerät zugeordnet ist. Der Netzwerkbetreiber entschlüsselt die Signatur und überträgt die entschlüsselte Signatur zurück an den Anbieter, der somit den Nutzer, der die Transaktion durchführen möchte, verifizieren kann. Dieses Verfahren ist jedoch aufwändig, da es bei jeder Transaktion stets die Einbeziehung des Netzbetreibers erfordert.

In der GB 2 375 872 A ist beschrieben, dass der Nutzer eines Endgeräts, das einem Mobilfunknetz zugeordnet ist, eine Transaktion mit einem Anbieter durch eine digitale Signatur signiert. Diese Signatur kann im mobilen Endgerät abgespeichert sein. Nach Erhalt der digitalen Signatur kann der Anbieter den die Transaktion anfordernden Nutzer verifizieren, indem die Signatur beispielsweise mit Zertifikaten verglichen wird.

Die WO 2008/141947 A2 beschreibt eine Lösung, mittels derer die Privatsphäre eines Nutzers geschützt werden kann, wenn der Nutzer von einem ersten Kommunikationsnetz, dem Heimatnetz, in ein anderes Kommunikationsnetz überwechselt. Bei den Kommunikationsnetzen handelt es sich um Kommunikationsnetze vom selben Netzwerktyp.

Im allgemeinen Stand der Technik ist es zudem bekannt, dass in Mobilfunknetzen der Datenverkehr üblicherweise über Rechnereinrichtungen, beispielsweise Proxy-Rechnereinrichtungen, des Netzbetreibers geroutet wird. Das ermöglicht es dem Netzbetreiber, Transaktionsanfragen, die ein Nutzer über sein mobiles Endgerät, welches dem Mobilfunknetz zugeordnet ist, an einen Anbieter richtet, mit einer identifikationskennung des Nutzers und/oder des mobilen Endgeräts, beispielsweise der MSISDN, anzureichern. Die Identifikationskennung ist in diesem Fall ein eindeutiges Identifizierungsmittel, mit dem der Anbieter den die Transaktion anfragenden Nutzer und/oder dessen Endgerät identifizieren kann.

Heutzutage sind die modernen mobilen Endgeräte, beispielsweise Smartphones und dergleichen, in der Lage, neben einer Kommunikation über das Mobilfunknetz auch über ein zweites, vom Mobilfunknetz unabhängiges Kommunikationsnetz, beispielsweise mittels WLAN / LAN über DSL, zu kommunizieren. In solchen Fällen kann eine Identifikationskennung des Endgeräts aus dem Mobilfunknetz, beispielsweise die MSISDN, nicht mehr vom Betreiber des Mobilfunknetzes an einer Transaktionsanfrage angereichert werden, da die oben genannten Rechnereinrichtungen des Mobilfunknetzbetreibers bei einer Kommunikation über WLAN, LAN über DSL nicht mehr involviert sind. Deshalb kann der Anbieter den Nutzer und/oder das Endgerät eines Nutzers, welcher/welches eine Transaktion durchführen möchte, nicht mehr identifizieren.

Hiervon ausgehend liegt der vorliegenden Erfindung die Aufgabe zugrunde, Verfahren der eingangs genannten Art sowie ein Endgerät der eingangs genannten Art derart weiterzubilden, dass auf einfache und unaufwändige Weise Mobilfunknetz basierte Transaktionssysteme auch in Situationen außerhalb des Mobilfunksektors, beispielsweise in WLAN über DSL Situationen oder DSL-Situationen, genutzt werden können.

Diese Aufgabe wird erfindungsgemäß gelöst durch das Verfahren zur Initialisierung und/oder Aktivierung wenigstens eines Nutzerkontos und/oder einer Nutzeridentifikationskennung bei wenigstens einem Anbieter mit den Merkmalen gemäß dem unabhängigen Patentanspruch 1, das Verfahren zum Durchführen einer Transaktion zwischen einem, einem Nutzer zugeordneten Endgerät und einem Anbieter mit den Merkmalen gemäß dem unabhängigen Patentanspruch 11 sowie durch das Endgerät mit den Merkmalen gemäß dem unabhängigen Patentanspruch 14. Weitere Merkmale und Details der Erfindung ergeben sich aus den Unteransprüchen, der Beschreibung sowie den Zeichnungen. Dabei gelten Merkmale und Details, die im Zusammenhang mit einem der beiden Verfahrensaspekte beschrieben sind, selbstverständlich vollumfänglich auch im Zusammenhang mit dem jeweils anderen Verfahrensaspekt, und umgekehrt, so dass wechselseitig auf die jeweiligen Ausführungen vollinhaltlich Bezug genommen und verwiesen wird. Ebenso gelten Merkmale und Details; die im Zusammenhang mit den beiden Verfahrensaspekten beschrieben sind, selbstverständlich vollumfänglich auch im Zusammenhang mit dem erfindungsgemäßen Endgerät, und umgekehrt, so dass auch hier wechselseitig auf die jeweiligen Ausführungen vollinhaltlich Bezug genommen und verwiesen wird.

Der Grundgedanke der vorliegenden Erfindung besteht insbesondere darin, dass mittels eines über ein erstes Kommunikationsnetz, beispielsweise ein Mobilfunknetz, ablaufendes Verfahren auf Seiten eines Anbieters zumindest eine Nutzeridentifikationskennung, vorzugsweise auch ein Nutzerkonto, erzeugt wird. Diese wird auf das Endgerät eines Nutzers, für den die Nutzeridentifikationskennung bestimmt ist, übertragen und dort abgespeichert. Später kann die Nutzeridentifikationskennung, bei der es sich um ein eindeutiges identifizierungsmittel für den Nutzer handelt, auch verwendet werden, wenn der Nutzer über sein Endgerät über ein zweites, vom ersten Kommunikationsnetz unabhängiges, Kommunikationsnetz mit einem Anbieter kommuniziert und eine Transaktion durchführen möchte. Die Nutzeridentifikationskennung ist insbesondere kommunikationsnetzunabhängig. Das bedeutet insbesondere, dass ein und dieselbe Nutzeridentifikationskennung somit in verschiedenen Kommunikationsnetzen, beziehungsweise für Transaktionen, die über verschiedene Kommunikationsnetze erfolgen, angewendet werden kann. Das heißt, es existiert eine allgemeingültige Nutzeridentifikationskennung, die für unterschiedliche Kommunikationsnetze Gültigkeit hat. Bei wenigstens einem der Kommunikationsnetze, vorzugsweise bei beiden Kommunikationsnetzen, kann es sich insbesondere um ein Telekommunikationsnetz handeln.

Bei einer Transaktion handelt es sich insbesondere um einen Abschluss im Geschäftsverkehr. Beispielsweise kann es sich bei einer Transaktion um einen Abschluss im elektronischen Geschäftsverkehr handeln. Der elektronische Geschäftsverkehr kann insbesondere auch als E-Commerce oder E-Business bezeichnet werden.

Bei einem Nutzerkonto handelt es sich insbesondere um einen Login beim Anbieter, in dem zudem das Profil des Nutzers abgelegt ist. Eine Nutzeridentifikationskennung ist eine Kennung, die es dem Anbieter ermöglich, den Nutzer, dem insbesondere ein Nutzerkonto beim Anbieter gehört, zu identifizieren.

Dabei ist die vorliegende Erfindung nicht auf bestimmte Anwendungen beschränkt. Bevorzugt ist vorgesehen, dass durch die vorliegende Erfindung ein SIM-Karten basiertes Bezahlen sowohl in Mobilfunknetzwerken als auch in WLAN/LAN/DSL-Situationen, insbesondere WLAN/LAN über DSL Situationen, ermöglicht wird. Insbesondere wird eine Möglichkeit geschaffen, wie MSISDN basierte Bezahlsysteme auch in WLAN-Situationen genutzt werden können.

Wesentliche Anwendungsgebiete der vorliegenden Erfindung sind beispielsweise Services, die dem Endkunden sowohl beim Internetzugang über Mobilfunk, etwa GSM, UMTS, LTE und dergleichen, als auch über WLAN, LAN, DSL und dergleichen ihre Dienste anbieten, beispielsweise Bezahlverfahren, Identity-Management und dergleichen.

Gemäß dem ersten Aspekt der vorliegenden Erfindung wird ein Verfahren zur Initialisierung und/oder Aktivierung wenigstens eines Nutzerkontos und/oder einer Nutzeridentifikationskennung bei wenigstens einem Anbieter mittels eines ersten Kommunikationsnetzes, insbesondere eines Mobilfunknetzes, bereitgestellt, welches die Merkmale des unabhängigen Patentanspruchs 1 aufweist.

Gemäß diesem ersten Aspekt der Erfindung wird ein Verfahren zur Initialisierung und/oder Aktivierung wenigstens eines Nutzerkontos und/oder einer Nutzeridentifikationskennung bei wenigstens einem Anbieter bereitgestellt. Dabei ist insbesondere vorgesehen, dass der Nutzer bei dem Anbieter, beispielsweise einem Service-Anbieter, einem Warenanbieter oder dergleichen, ein Nutzerkonto, auch Account genannt, und/oder eine Nutzeridentifikationskennung, beispielsweise einen so genannten Account Key, bekommt oder hat. Initialisierung bedeutet insbesondere, dass ein solches Nutzerkonto und/oder eine solche Nutzeridentifikationskennung beim Anbieter für den Nutzer neu angelegt wird. Aktivierung bedeutet insbesondere, dass ein bereits vorhandenes Nutzerkonto und/oder eine bereits vorhandene Nutzeridentifikationskennung gestartet wird. Vorzugsweise kann vorgesehen sein, dass eine Nutzerkontoinitialisierung und/oder eine Nutzeridentifikationskennungs-Initialisierung bei einem Bezahlanbieter initialisiert werden kann.

Dabei handelt es sich um eine Situation, die sich in einem ersten Kommunikationsnetz abspielt. Das Verfahren gemäß dem ersten Aspekt der Erfindung erfolgt mittels eines ersten Kommunikationsnetzes. Dabei ist die vorliegende Erfindung nicht auf bestimmte Kommunikationsnetztypen beschränkt. Bevorzugt handelt es sich bei dem ersten Kommunikationsnetz um ein Telekommunikationsnetz, insbesondere um ein Mobilfunknetz, etwa nach dem GSM, UMTS, LTE Standard und dergleichen, so dass es sich in einem solchen Fall um eine Mobilfunknetzsituation handelt.

Erfindungsgemäß wird weiterhin gewährleistet, dass das Nutzerkonto und/oder die Nutzeridentifikationskennung, welche(s) in einer Situation, die sich in einem ersten Kommunikationsnetz abspielt, initialisiert und/oder aktiviert wird, in wenigstens einem weiteren, zum ersten Kommunikationsnetz unabhängigen zweiten Kommunikationsnetz Gültigkeit hat. Diesbezüglich wird auch auf die allgemeinen Erläuterungen zur Nutzeridentifikationskennung weiter oben vollinhaltlich Bezug genommen und verwiesen. Bei dem zweiten Kommunikationsnetz kann es sich beispielsweise ebenfalls um ein Telekommunikationsnetz, etwa nach dem WLAN, LAN, DSL Standard, insbesondere um WLAN/LAN über DSL, und dergleichen handeln.

Zur Durchführung des erfindungsgemäßen Verfahrens sind folgende Schritte vorgesehen:
Über ein dem ersten Kommunikationsnetz zugeordnetes Endgerät wird vom Nutzer eine Anfrage zur Initialisierung und/oder Aktivierung des Nutzerkontos und/oder der Nutzeridentifikationskennung erzeugt und über eine Kommunikationsverbindung des ersten Kommunikationsnetzes, insbesondere über einen Kommunikationskanal des ersten Kommunikationsnetzes, vom Endgerät des Nutzers zum Anbieter, insbesondere zumindest teilweise verschlüsselt, übertragen.

Bei dem Endgerät handelt es sich insbesondere um ein elektronisches Endgerät, das dem ersten Kommunikationsnetz zugeordnet ist, das aber auch eine Kommunikation über das zweite Kommunikationsnetz ermöglicht. Vorzugsweise handelt es sich um ein mobiles Endgerät. Im Falle eines Mobilfunknetzes als erstem Kommunikationsnetz kann das Endgerät beispielsweise als Mobiltelefon, als Smartphone, als Notebook, als Tablet-Rechner und dergleichen ausgebildet sein.

Während die Anfrage von dem Endgerät des Nutzers zum Anbieter übertragen wird, wird auf Seiten des ersten Kommunikationsnetzes der Anfrage eine den Nutzer und/oder das Endgerät des Nutzers charakterisierende Identifikationskennung zugeordnet. Dabei ist die Erfindung nicht auf bestimmte Typen von Identifikationskennungen beschränkt. Einige vorteilhafte, jedoch nicht ausschließliche Beispiele werden im weiteren Verlauf der Beschreibung näher erläutert.

Vorzugsweise kann vorgesehen sein, dass die im Endgerät des Nutzers erzeugte Anfrage an eine dem ersten Kommunikationsnetz zugeordnete Rechnereinrichtung übertragen wird, dass in der Rechnereinrichtung der Anfrage die den Nutzer und/oder das Endgerät des Nutzers charakterisierende Identifikationskennung zugeordnet wird und dass die angereicherte Anfrage von der Rechnereinrichtung an den Anbieter übertragen wird. Beispielsweise kann es sich bei der Rechnereinrichtung um eine Servereinrichtung handeln. Bei der Servereinrichtung kann es sich beispielsweise um einen PROXY, beispielsweise eine Art Vermittler in einem Computernetzwerk, handeln.

Nachdem die mit der Identifikationskennung angereicherte Anfrage zum Anbieter übertragen und von diesem empfangen worden ist wird auf Seiten des Anbieters zumindest eine kommunikationsnetzunabhängige Nutzeridentifikationskennung erzeugt. Die Charakteristik einer solchen kommunikationsnetzunabhängigen Nutzeridentifikationskennung ist weiter oben im Detail beschreiben, so dass an dieser Stelle auf die entsprechenden Ausführungen weiter oben vollinhaltlich Bezug genommen und verwiesen wird. In weiterer Ausgestaltung kann auch vorgesehen sein, dass auf Seiten des Anbieters ein Nutzerkonto erzeugt wird, wobei die Nutzeridentifikationskennung in diesem Fall einen Bestandteil des Nutzerkontos darstellt. Bei der Nutzeridentifikationskennung kann es sich insbesondere um eine Art Kundennummer handeln, die vom Anbieter für den anfragenden Nutzer und/oder dessen Endgerät vergeben wird.

Vorzugsweise kann vorgesehen sein, dass die angereicherte Anfrage an eine dem Anbieter zugeordnete Rechnereinrichtung übertragen wird, dass in der Rechnereinrichtung des Anbieters nach Empfang der angereicherten Anfrage eine Nutzeridentifikationskennung erzeugt wird und dass die Nutzeridentifikationskennung von der Rechnereinrichtung des Anbieters an das Endgerät des Nutzers, vorzugsweise über die dem ersten Kommunikationsnetz zugeordnete Rechnereinrichtung, insbesondere über eine Kommunikationsverbindung des ersten Kommunikationsnetzes, übertragen wird. Beispielsweise kann es sich bei der Rechnereinrichtung des Anbieters um eine Servereinrichtung handeln.

Die erzeugte Nutzeridentifikationskennung wird vom Anbieter an das Endgerät des Nutzers, insbesondere zumindest teilweise verschlüsselt, übertragen und in diesem abgespeichert. Dabei sind verschiedene Orte möglich, wo eine Abspeicherung im Endgerät erfolgen kann. Einige bevorzugte, jedoch nicht ausschließliche Beispiele hierzu werden im weiteren Verlauf der Beschreibung näher erläutert.

Bevorzugt ist vorgesehen, dass das erste Kommunikationsnetz als Mobilfunknetz ausgebildet ist. In einem solchen Fall wird während der Übertragung auf Seiten des ersten Kommunikationsnetzes der Anfrage bevorzugt eine den Nutzer und/oder das Endgerät des Nutzers charakterisierende MSISDN zugeordnet. Der Betreiber des Mobilfunknetzes reichert die Anfrage somit mit der MSISDN an. Man könnte auch sagen, dass die MSISDN in die Anfrage injiziert wird.

Die vorliegende Erfindung ist jedoch nicht auf bestimmte Typen von Identifikationskennungen beschränkt. Grundsätzlich kann eine Identifikationskennung jegliche Art von Kennung umfassen, die von anderen Stellen zugeordnet werden kann. Die Identifikationskennung muss so geartet sein, dass sie eine eindeutige Identifizierung des elektronischen Endgeräts oder Nutzers ermöglicht. Insbesondere sollen die Identifikationskennungen so gestaltet sein, dass sie verschlüsselt und entschlüsselt werden können. Insbesondere sollen die Identifikationskennungen auch so gestaltet sein, dass sie vom Anbieter erkannt und gekannt werden können. Im Zusammenhang mit einem Mobilfunknetz kann es sich bei einer solchen Identifikationskennung bevorzugt um eine IMSI (International Mobile Subscriber Identity) und/oder um eine MSISDN (Mobile Subscriber Integrated Services Digital Network Number) handeln. Eine IMSI besteht insbesondere aus 15 Ziffern und stellt die Identifikationsnummer eines Mobiltelefons dar. Eine MSISDN ist insbesondere eine einmalig vorhandene, einem bestimmten Nutzer zugeordnete Rufnummer, die ein Anrufer wählt, um einen Mobilfunkteilnehmer zu erreichen.

Im Fall eines Mobilfunknetzes als erstem Kommunikationsnetz ist somit der Fortbestand der MSISDN zur Identifizierung der Endkunden gewährleistet. Dadurch können insbesondere alle bestehenden mobilen Services, unabhängig vom Zugang, weiterhin genutzt werden.

Vorzugsweise wird die Nutzeridentifikationskennung in einer dem Endgerät zugeordneten Speichereinrichtung abgespeichert. Darüber hinaus können in der Speichereinrichtung insbesondere auch Anbieterspezifische Daten abgespeichert sein. Bei solchen Daten kann es sich beispielsweise eine Anbieter-ID, den Namen des Anbieters, eine URL-des Anbieters, öffentliche Schlüssel des Anbieters und dergleichen handeln. Daneben können auch private und öffentliche Schlüssel des Nutzers an dieser Stelle abgespeichert sein.

Vorzugsweise kann die Nutzeridentifikationskennung in einem dem Endgerät zugeordneten Nutzermodul abgespeichert werden. Bei einem Nutzermodul handelt es sich insbesondere um ein Modul, das zur Identifikation des Nutzers im Netz dient. Bei dem Nutzermodul handelt es sich insbesondere um einen Bereich innerhalb des Endgeräts, der für die Belange des erfindungsgemäßen Verfahrens ausgebildet ist. Dabei ist die Erfindung nicht auf bestimmte Typen von Nutzermodulen beschränkt. Bevorzugt ist vorgesehen, dass es sich bei dem Nutzermodul um eine SIM, eine SIM-Applikation, eine Chipkarten-Applikation oder um einen gesicherten Bereich im Endgerät handeln.

Dabei kann die Chipkarten-Applikation beispielsweise in Form einer Chipkarte im Endgerät vorgesehen sein. In anderer Ausgestaltung ist auch denkbar, dass die Chipkartenapplikation in Form einer Softwareapplikation im elektronischen Endgerät implementiert ist. Chipkarten, die oft auch als Smartcard oder Integrated Circuit Card (ICC) bezeichnet werden, weisen insbesondere einen integriertem Schaltkreis auf, der eine Hardware-Logik, eine Speichereinrichtung oder auch einen Mikroprozessor enthalten kann. Bevorzugt kann vorgesehen sein, dass es sich bei dem Nutzermodul um eine SIM-Applikation handelt. Bei einer SIM (Subscriber Identity Module) handelt es sich insbesondere um eine Chipkarte, die in ein Mobiltelefon eingesteckt wird und die zur Identifikation des Nutzers im Mobilfunknetz dient. Mit ihr stellen Mobilfunkanbieter Teilnehmern mobile Telefonanschlüsse und Datenanschlüsse zur Verfügung.

Bevorzugt kann als Identifikationskennung eine dem Nutzer des Endgeräts zugeordnete MSISDN (Mobile Subscriber Integrated Services Digital Network Number) vorgesehen sein. Der vom Endgerät an den Anbieter übertragenen Anfrage wird dann die MSISDN als Identifikationskennung zugeordnet.

Beispielsweise kann das Nutzermodul dabei eine entsprechende Speichereinrichtung aufweisen. Vorzugsweise kann es sich bei einer solchen Speichereinrichtung um eine Speichereinrichtung handeln, in der, wie weiter oben beschrieben ist, die Nutzeridentifikationskennung und optional die Anbieterspezifischen Daten abgespeichert sind.

Bevorzugt ist weiterhin ein Verfahren, bei dem das Nutzermodul eine Verschlüsselungsmaschine zum Verschlüsseln und/oder Entschlüsseln von Daten und/oder zum Erzeugen von Schlüsseln zum Verschlüsseln und/oder Entschlüsseln von Daten aufweist, bei dem mittels der Verschlüsselungsmaschine zumindest Teile der Anfrage verschlüsselt werden und/oder zumindest Teile der empfangenen Nutzerkennung entschlüsselt werden und/oder Schlüssel erzeugt werden um. zumindest Teile der Anfrage zu verschlüsseln und/oder zumindest Teile der empfangenen Nutzerkennung zu entschlüsseln, und/oder bei dem das Nutzermodul eine Speichereinrichtung aufweist, in der vom Nutzermodul erzeugte und/oder empfangene Daten zumindest zeitweilig abgespeichert werden. Bei der Speichereinrichtung kann es sich bevorzugt um die weiter oben beschriebene Speichereinrichtung handeln.

Sicherheit ist ein besonders wichtiger Aspekt bei der erfindungsgemäßen Implementierung. Bevorzugt ist vorgesehen, dass das Nutzermodul, beispielsweise in Form einer SIM-Applikation, auch die Speicherung und Verschlüsselung von Daten vornimmt. Bevorzugt ist vorgesehen, dass das Nutzermodul eine Verschlüsselungsmaschine, eine Speichereinrichtung zum Speichern von Daten, eine Administrations GUI (Graphical User Interface) und eine Schnittstelle zu einer weiter unten näher beschriebenen Applikation aufweist.

Beispielsweise kann es sich bei dem vom Anbieter angebotenen Dienst um einen Bezahldienst handeln, dann sind die vorgenannten Komponenten insbesondere auf die Durchführung von Bezahlvorgängen zugeschnitten beziehungsweise ausgebildet.

Bevorzugt wird die Anfrage zur Initialisierung und/oder Aktivierung des Nutzerkontos und/oder der Nutzeridentifikationskennung von einer dem Endgerät zugeordneten Applikation zum Anbieter übertragen, wobei die vom Anbieter erzeugte Nutzeridentifikationskennung von der Applikation empfangen wird.

Vorzugsweise kommuniziert die Applikation über eine Schnittstelle mit dem Nutzermodul, wobei über die Schnittstelle von der Applikation Daten aus dem Nutzermodul ausgelesen und/oder auf diesem ablegt werden.

Durch das Verfahren gemäß diesem ersten Aspekt der Erfindung wird die Initialisierung und/oder Aktivierung des Nutzerkontos, beispielsweise des Accounts, und/oder der Nutzeridentifikationskennung durch das erste Kommunikationsnetz, beispielsweise das Mobilfunknetz, realisiert. Aber die Verwendung des Nutzerkontos und/oder der Nutzeridentifikationskennung funktioniert auch in einem zweiten Kommunikationsnetz, beispielsweise in WLAN, DSL, LAN, insbesondere in WLAN/LAN über DSL Situationen, und dergleichen. Jede auf dem Endgerät implementierte Applikation kann die erzeugte Nutzeridentifikationskennung nutzen. Dabei ist das erfindungsgemäße Verfahren Träger (Carrier) unabhängig.

Zur Verdeutlichung dieses ersten Erfindungsaspekts wird dieser nachfolgend anhand eines Beispiels exemplarisch beschrieben.

Beispielsweise kann es sich bei dem Anbieter um einen Anbieter im Internet handeln, der eine Webseite betreibt, wobei die Webseite auf einer Servereinrichtung, einem Rechner oder dergleichen abgelegt ist und über diesen kontaktiert werden kann. Der Nutzer eines elektronischen Endgeräts, beispielsweise eines Smartphones, das einem Mobilfunknetz zugeordnet ist, ruft über sein elektronisches Endgerät über das zweite Kommunikationsnetz, beispielsweise das Internet, die Webseite der Partei auf. Da die Kommunikation nicht über das Mobilfunknetz, sondern über das Internet erfolgt, fehlt in der Kommunikation die Identifikationskennung des elektronischen Endgeräts im ersten Kommunikationsnetz, beispielsweise die MSISDN.

Aus diesem Grund wird bei der Initialisierung/Aktivierung des Nutzerkontos und/oder der Nutzeridentifikationskennung vom Nutzer über sein elektronisches Endgerät eine Kommunikationsverbindung im ersten Kommunikationsnetz, beispielsweise eine Mobiffunkverbindung, zum Anbieter aufgebaut, wobei der vom Endgerät zum Anbieter übertragenen Anfrage vom Betreiber des Mobilfunknetzes die entsprechende MSISDN des Nutzers hinzugefügt wird.

Der Anbieter erhält somit eine eindeutige Identifizierung des Nutzers, kann darauf basierend ein Nutzerkonto und/oder eine Nutzeridentifikationskennung erzeugen und diese an das Endgerät des Nutzers zurückschicken. Dort wird die Nutzeridentifikationskennung abgespeichert.

Möchte der Nutzer nunmehr eine Transaktion mit dem Anbieter durchführen, was nachfolgend im Zusammenhang mit dem zweiten Erfindungsaspekt beschrieben wird, kann er dies auch über das zweite Kommunikationsnetz, beispielsweise WLAN, DSL, LAN, insbesondere in WLAN/LAN über DSL Situationen, und dergleichen tun, da die Nutzeridentifikationskennung auch hierfür Gültigkeit hat.

Gemäß dem zweiten Aspekt der Erfindung wird ein Verfahren zum Durchführen einer Transaktion zwischen einem, einem Nutzer zugeordneten Endgerät und einem Anbieter, bereitgestellt, welches die Merkmale des unabhängigen Patentanspruchs 11 aufweist.

Bezüglich der einzelnen Verfahrenskomponenten sowie deren Ausgestaltung und Funktionsweise wird ebenfalls auf die vorstehenden Ausführungen zum erfindungsgemäßen ersten Verfahrensaspekt vollinhaltlich Bezug genommen und verwiesen.

Bei diesem Verfahren kann eine Transaktion zwischen einem, einem Nutzer zugeordneten Endgerät und einem Anbieter, durchgeführt werden. Bei einer Transaktion handelt es sich insbesondere um einen wie weiter oben erläuterten Abschluss im Geschäftsverkehr. Beispielsweise kann es sich bei einer Transaktion um einen Abschluss im elektronischen Geschäftsverkehr handeln. Bei einer Transaktion handelt es sich insbesondere um einen Leistungsaustausch zwischen dem Nutzer und dem Anbieter. Beispielsweise kann die Transaktion eine Übertragung von Gütern und/oder Informationen zwischen dem Nutzer und dem Anbieter beinhalten. Dabei kann auch vorgesehen sein, dass die Transaktion einen Bezahlvorgang darstellt oder umfasst.

Um das Verfahren durchführen zu können, ist auf dem Endgerät des Nutzers eine Applikation zum Durchführen von Transaktionen, insbesondere zwischen dem Nutzer und dem Anbieter, implementiert.

Zwischen dem Endgerät und dem Anbieter, insbesondere einer dem Anbieter zugeordneten Rechnereinrichtung, findet über eine Kommunikationsverbindung in einem Kommunikationsnetz, insbesondere dem Internet über WLAN, LAN, DSL, insbesondere in WLAN/LAN über DSL Situationen, und dergleichen, eine Kommunikation bezüglich der Transaktion statt.

Dazu wird von der Applikation im Endgerät eine Transaktionsanfrage erzeugt und an den Anbieter übertragen.

Erfindungsgemäß ist vorgesehen, dass die Applikation zur Erzeugung der Transaktionsanfrage auf ein dem Endgerät zugeordnetes Nutzermodul zugreift; beispielsweise über eine geeignete Schnittstelle zwischen Applikation und Nutzermodul.

Bei dem Nutzermodul kann es sich bevorzugt um ein wie weiter oben in Bezug auf den ersten Erfindungsaspekt beschriebenes Nutzermodul, insbesondere um eine SIM oder eine SIM-Applikation oder eine Chipkarten-Applikation oder einen gesicherten Bereich im Endgerät handeln, so dass auf die entsprechenden Ausführungen weiter oben vollinhaltlich Bezug genommen und verwiesen wird.

Aus einer dem Nutzermodul zugeordneten Speichereinrichtung, die für die Transaktion verfügbare Anbieter sowie entsprechende Nutzeridentifikationskennungen des Nutzers bei diesen Anbietern aufweist, wird von der Applikation oder über die Applikation ein Anbieter, für den eine Nutzeridentifikationskennung vorhanden ist, ausgewählt. Bei der Nutzeridentifikationskennung handelt es sich insbesondere um eine kommunikationsnetzunabhängige Nutzeridentifikationskennung. Ein und dieselbe Nutzeridentifikationskennung kann somit in verschiedenen Kommunikationsnetzen, beziehungsweise für Transaktionen, die über verschiedene Kommunikationsnetze erfolgen, angewendet werden. Das heißt, es existiert eine allgemeingültige Nutzeridentifikationskennung, die für unterschiedliche Kommunikationsnetze Gültigkeit hat. Diesbezüglich wird auch auf die allgemeinen Erläuterungen zur kommunikationsnetzunabhängigen Nutzeridentifikationskennung vollinhaltlich Bezug genommen und verwiesen.

Die Applikation liest die Nutzeridentifikationskennung des Anbieters aus der dem Nutzermodul zugeordneten Speichereinrichtung aus. Beispielsweise kann vorgesehen sein, dass die auf dem Endgerät implementierte Applikation die Nutzeridentifikationskennung, beispielsweise einen Nutzerkonto-Schlüssel - einen so genannten Account Key - aus einem als SIM-Applikation ausgebildeten Nutzermodul ausliest.

In der Applikation wird diese Nutzeridentifikationskennung der Transaktionsanfrage hinzugefügt. Weiterhin kann vorgesehen sein, dass zumindest Bestandteile der Transaktionsanfrage und der Nutzeridentifikationskennung in geeigneter Weise verschlüsselt werden, wozu eine Verschlüsselungsmaschine, die bevorzugt im Nutzermodul implementiert ist, verwendet wird.

Die mit der Nutzeridentifikationskennung angereicherte Transaktionsanfrage wird anschließend von der Applikation des Endgeräts beziehungsweise vom Endgerät an den Anbieter übertragen.

Auf Seiten des Anbieters wird die Nutzeridentifikationskennung verifiziert. Bei erfolgreicher Verifikation wird die Transaktion durchgeführt.

Der Anbieter, beispielsweise ein Bezahlanbieter - ein so genannter Payment Provider -, wird mit der Nutzeridentifikationskennung angefragt. Dabei ist keine Anreicherung, etwa mit einer Identifikationskennung aus einem ersten Kommunikationsnetz, etwa einer MSISDN, mehr erforderlich, da die Nutzeridentifikationskennung ein eindeutiges Identifizierungsmittel ist, egal ob die Transaktion über eine erstes Kommunikationsnetz, beispielsweise ein Mobilfunknetz, oder aber über ein zweites Kommunikationsnetz, beispielsweise WLAN, LAN, DSL, insbesondere in WLAN/LAN über DSL Situationen, oder dergleichen erfolgt.

Unabhängig vom genutzten Kommunikationsnetz kann im Nutzermodul, beispielsweise auf einer SIM, eine Service spezifische Nutzeridentifikationskennung, beispielsweise in Form eines Cookies, abgelegt werden, was den Nutzer auf Service-Level, beispielsweise im Zusammenhang mit einem Bezahldienst, identifiziert. Ganz gleich, wie sich der Nutzer mit seinem Endgerät ins Internet einwählt, ob über das Mobilfunknetz oder ein dazu unterschiedliches zweites Kommunikationsnetz wie WLAN, LAN. DSL oder dergleichen, Der Nutzer wird von der Gegenstelle, beispielsweise einem Bezahldienst, immer und vor allem sicher erkannt.

Bevorzugt kann nach erfolgter Transaktion ein Statusbericht vom Anbieter an die Applikation des Endgeräts beziehungsweise das Endgerät geschickt werden.

Vorzugsweise kann das Nutzermodul eine Verschlüsselungsmaschine zum Verschlüsseln und/oder Entschlüsseln von Daten und/oder zum Erzeugen von Schlüsseln zum Verschlüsseln und/oder Entschlüsseln von Daten aufweisen, wobei mittels der Verschlüsselungsmaschine zumindest Teile der Transaktionsanfrage verschlüsselt werden und/oder zumindest Teile der empfangenen Daten des Anbieters entschlüsselt werden. Bei der Verschlüsselungsmaschine kann es sich bevorzugt um ein wie weiter oben in Bezug auf den ersten Erfindungsaspekt beschriebene Verschlüsselungsmaschine handeln, so dass auf die entsprechenden Ausführungen weiter oben vollinhaltlich Bezug genommen und verwiesen wird.

Die für die Transaktion verfügbaren Anbieter sowie entsprechende Nutzeridentifikationskennungen des Nutzers bei diesen Anbietern werden oder sind in der Speichereinrichtung des Endgeräts voreingestellt, und/oder für die Transaktion verfügbare Anbieter sowie entsprechende Nutzeridentifikationskennungen des Nutzers bei diesen Anbietern werden mittels eines wie vorstehenden beschriebenen erfindungsgemäßen Verfahrens gemäß dem ersten Erfindungsaspekt erzeugt und in der Speichereinrichtung abgespeichert. Auf die vorstehenden Ausführungen zum ersten Erfindungsaspekt wird vollinhaltlich Bezug genommen und verwiesen.

Gemäß einem dritten Aspekt der vorliegenden Erfindung wird ein Endgerät bereitgestellt, welches die Merkmale des unabhängigen Patentanspruchs 14 aufweist.

Das Endgerät weist Mittel zur Durchführung der Verfahren gemäß dem ersten und zweiten Erfindungsaspekt auf, so dass bezüglich der Ausgestaltung und Funktionsweise des Endgeräts auf die entsprechenden Ausführungen zu den beiden Verfahrensaspekten vollinhaltlich Bezug genommen und verwiesen wird.

Ein grundlegendes Merkmal der vorliegenden Erfindung, wie sie anhand der drei Erfindungsaspekte beschrieben ist, besteht darin, dass die Nutzeridentifikationskennung des Nutzers bei einem Anbieter im Nutzermodul, beispielsweise der SIM-Applikation, im Endgerät des Nutzers abgespeichert wird. Ein weiteres Merkmal stellt eine Applikation dar, die auf dem Endgerät implementiert ist und die über eine Schnittstelle auf das Nutzermodul zugreift.

Bei der ersten Kontaktaufnahme des Nutzers mit dem Anbieter wird auf Seiten des Anbieters zumindest eine Nutzeridentifikationskennung, optional auch ein Nutzerkonto, eingerichtet. Dazu erfolgt die Kommunikation zwischen dem Nutzer beziehungsweise dem Endgerät des Nutzers, und dem Anbieter über ein erstes Kommunikationsnetz, beispielsweise ein Mobilfunknetz. Dabei wird die Anfrage durch den Betreiber des ersten Kommunikationsnetzes mit einer Identifikationskennung des Nutzers, beispielsweise dessen MSISDN, angereichert.

Das Nutzermodul kann nunmehr die verschiedenen Anbieter, die Nutzeridentifikationskennungen, optional auch weitere Anbieter spezifische Informationen, abspeichern und gegebenenfalls auch verschlüsseln.

Die Erfindung wird nun anhand von Ausführungsbeispielen, unter Bezugnahme auf die beiliegenden Zeichnungen, näher erläutert. Es zeigen
- Figur 1: in schematischer Ansicht die aus dem Stand der Technik bekannte Ausgangssituation der vorliegenden Erfindung;
- Figur 2: in allgemein schematischer Darstellung, wie eine Initialisierung und/oder Aktivierung eines Nutzerkontos und/oder einer Nutzeridentifikationskennung bei einem Anbieter erfolgt;
- Figur 3: die schematische Darstellung auf Basis von Figur 2, aus der der Fluss der Verschlüsselungs-Schlüssel ersichtlich wird;
- Figur 4: ein Ausführungsbeispiel, bei dem ein neuer Anbieter auf dem Endgerät eines Nutzers initialisiert wird;
- Figur 5: in allgemein schematischer Darstellung, wie ein Verfahren zur Durchführung einer Transaktion zwischen einem Nutzer und einem Anbieter durchgeführt wird;
- Figur 6: In schematischer Darstellung ein verfahren zur Durchführung einer Transaktion zwischen einem Nutzer und einem Anbieter aus Sicht einer in einem Endgerät implementierten Applikation; und
- Figur 7: die schematische Darstellung auf Basis von den Figuren 5 und 6, aus der der Fluss der Verschlüsselungs-Schlüssel ersichtlich wird.

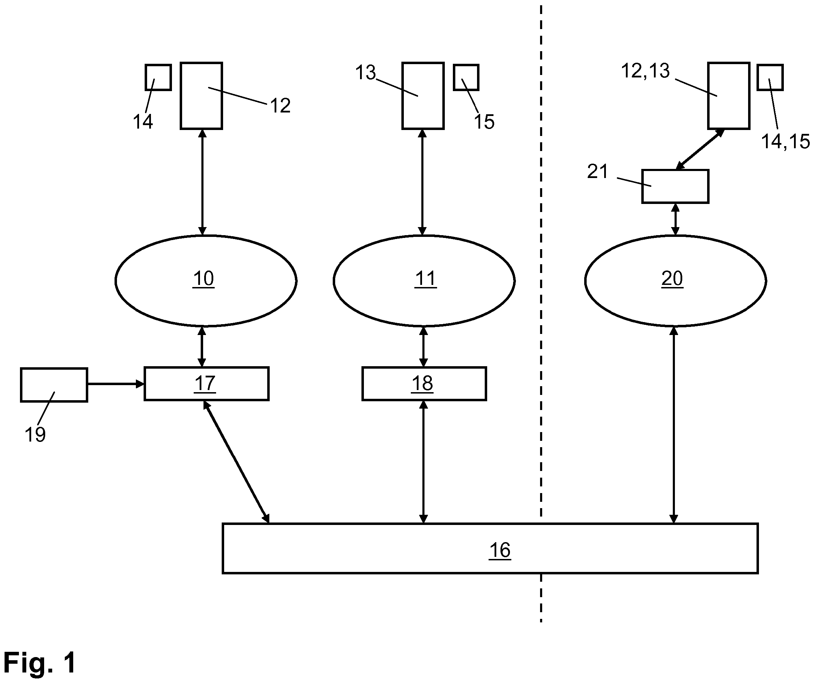

In Figur 1 ist eine Situation dargestellt, wie sie heutzutage aus dem Stand der Technik bekannt ist, und die als Ausgangssituation für die vorliegende Erfindung dient.

Im linken Teil von Figur 1 sind zwei verschiedene erste Kommunikationsnetze 10, 11 dargestellt, bei denen es sich um Mobilfunknetze handelt. In Mobilfunknetzen wird der Datenverkehr in der Regel über einen Proxy-Server des Netzbetreibers geroutet. Jedem ersten Kommunikationsnetz 10, 11 sind Endgeräte 12, 13 zugeordnet, bei denen es sich beispielsweise um Mobiltelefone handelt. Jedes Endgerät 12, 13 verfügt über ein Nutzermodul 14, 15, beispielsweise in Form einer SIM-Applikation.

Wenn ein Nutzer mittels seines Endgeräts 12, 13 über das erste Kommunikationsnetz 10, 11 mit einem Anbieter 16, beispielsweise einem Bezahlanbieter, kommuniziert und eine Anfrage zu einer Transaktion, beispielsweise einem Bezahlvorgang, an den Anbieter 16 schickt, wird der Datenverkehr über eine Rechnereinrichtung 17, 18 des Netzbetriebes, beispielsweise einen Proxy-Server, geroutet. Dadurch wird es dem Betreiber des ersten Kommunikationsnetzes 10, 11 ermöglicht, vom Endgerät 12, 13 des Nutzers an den Anbieter 16 gerichtete Anfragen mit einer Identifikationskennung 19, beispielsweise einer MSISDN des Nutzers, anzureichern. Diese Identifikationskennung 19 ist in diesem Fall eine eindeutige Identifizierungsmöglichkeit des Nutzers beim Anbieter 16.

In WLAN überDSL-Situationen, die im rechten Teil von Figur 1 dargestellt sind, kommuniziert der Nutzer über sein Endgerät 12, 13 über ein zum ersten Kommunikationsnetz verschiedenes zweites Kommunikationsnetz 20, beispielsweise das Internet, wobei die Kommunikation insbesondere über einen Router 21, beispielsweise einen WLAN/DSL-Router, erfolgen kann. In solchen WLAN über DSL-Situationen sind die Proxy-Server 17, 18 der Betreiber der ersten Kommunikationsnetze 10, 11 nicht involviert. Die Identifikationskennung 19, beispielsweise die MSISDN kann durch den Netzbetreiber folglich nicht in die Anfrage injiziert werden. Aus diesem Grund kann der Anbieter 16 den Nutzer auf diese Weise nicht identifizieren. Insbesondere ist es auf diese Weise nicht möglich, MSISDN basierte Bezahlsysteme in WLAN über DSL-Situationen zu verwenden.

Dies kann nunmehr durch die vorliegende Erfindung erreicht werden. Mit der vorliegenden Erfindung wird es insbesondere möglich, Mobilfunknetz basierte Bezahlfunktionen auch in Situationen außerhalb des Mobilfunknetzes, beispielsweise in WLAN über DSL-Situationen, nutzen zu können.

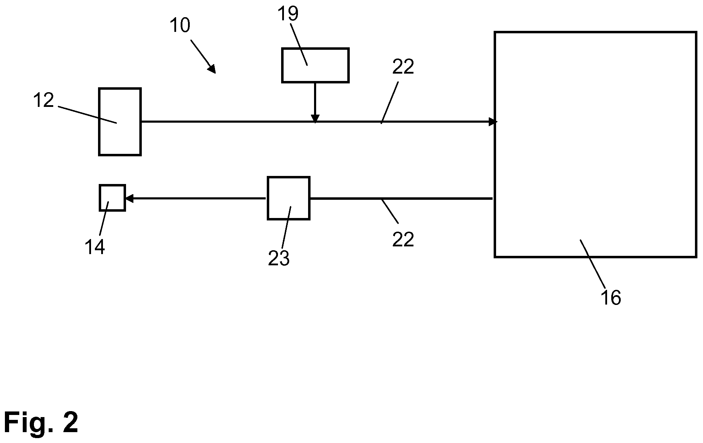

In Figur 2 ist allgemein schematisch dargestellt, wie eine Initialisierung und/oder Aktivierung eines Nutzerkontos und/oder einer Nutzeridentifikationskennung bei einem Anbieter 16 erfolgen kann. Dabei erfolgt die Initialisierung und/oder Aktivierung bei dem Anbieter 16 mittels eines ersten Kommunikationsnetzes 10, insbesondere eines Mobilfunknetzes, wobei das Nutzerkonto und/oder die Nutzeridentifikationskennung in wenigstens einem weiteren, zum ersten Kommunikationsnetz unabhängigen zweiten Kommunikationsnetz Gültigkeit haben soll. Es handelt sich somit um eine Situation im ersten Kommunikationsnetz. Über sein Endgerät 12, beispielsweise ein Mobiltelefon, welches ein Nutzermodul 14, beispielsweise eine SIM-Applikation, aufweist, überträgt der Nutzer eine entsprechende Anfrage an den Anbieter 16, was über einen dem ersten Kommunikationsnetz 10 zugeordneten Kommunikationskanal 22 erfolgt. Der Betreiber des ersten Kommunikationsnetzes 10 kann dabei die Anfrage mit einer den Nutzer eindeutig identifizierenden Identifikationskennung 19, beispielsweise die MSISDN, anreichern und die Anfrage somit entsprechend injizieren. Nach Erhalt der Anfrage erzeugt der Anbieter 16 eine Nutzeridentifikationskennung 23, beispielsweise einen so genannten Account Key, optional auch ein Nutzerkonto, wobei die Nutzeridentifikationskennung 23 Bestandteil des Nutzerkontos ist. Die Nutzeridentifikationskennung 23 wird über eine Kommunikationsverbindung, beispielsweise den Kommunikationskanal 22 des ersten Kommunikationsnetzes 10, an das Endgerät 12 des Nutzers geschickt und im Nutzermodul 14 abgespeichert. Zusätzlich können im Nutzermodul auch Informationen zur Identifikationskennung 19 oder die Identifikationskennung 19 selbst, beispielsweise zur MSISDN oder die MSISDN, abgespeichert sein.

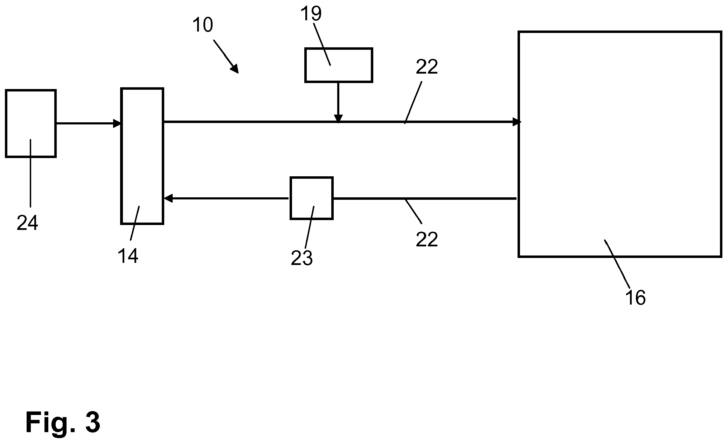

In Figur 3 ist eine auf Figur 2 basierende Ansicht dargestellt, aus der der Fluss von Verschlüsselungs-Schlüsseln ersichtlich wird. Dabei erfolgt die Initialisierung und/oder Aktivierung des Nutzerkontos und/oder der Nutzeridentifikationskennung bei dem Anbieter 16 wiederum mittels eines ersten Kommunikationsnetzes 10, insbesondere eines Mobilfunknetzes, wobei das Nutzerkonto in wenigstens einem weiteren, zum ersten Kommunikationsnetz unabhängigen zweiten Kommunikationsnetz Gültigkeit haben soll. Es handelt sich somit um eine Situation im ersten Kommunikationsnetz. Das Nutzermodul 14 des Endgeräts, bei dem es sich um eine SIM-Applikation handelt, empfängt "Over The Air (OTA)" 24 die URL, den Namen und den öffentlichen Schlüssel des Anbieters 16, wobei diese Anbieter spezifischen Daten in dem Nutzermodul 14 gespeichert werden. Im Nutzermodul 14 werden zudem Schlüsselpaare für jeden Anbieter erzeugt, nämlich öffentliche und private Schlüssel des Nutzers. Eine Anfrage wird vom Nutzermodul 14 an den Anbieter 16 übertragen, was über einen dem ersten Kommunikationsnetz 10 zugeordneten Kommunikationskanal 22 erfolgt. Die Anfrage kann Registrierungsdaten und den öffentlichen Schlüssel des Nutzers umfassen, wobei diese Daten mit dem öffentlichen Schlüssel des Anbieters verschlüsselt sein können. Beispielsweise kann auch vorgesehen sein, dass im Endgerät des Nutzers eine Applikation implementiert ist, die die Anfrage überträgt. In diesem Fall liest die Applikation die erforderlichen Daten über eine Schnittstelle aus dem Nutzermodul 14 aus. Der Betreiber des ersten Kommunikationsnetzes 10 kann dabei die Anfrage mit einer den Nutzer eindeutig identifizierenden Identifikationskennung 19, beispielsweise die MSISDN, anreichern und die Anfrage somit entsprechend injizieren. Nach Erhalt der Anfrage erzeugt der Anbieter 16 eine Nutzeridentifikationskennung 23, beispielsweise einen so genannten Account Key, optional auch ein Nutzerkonto, wobei die Nutzeridentifikationskennung 23 Bestandteil des Nutzerkontos ist. Dazu werden auf Seite des Anbieters 16 die empfangenen Daten mit dem privaten Schlüssel des Anbieters 16 entschlüsselt. Es wird ein Nutzerkonto für die empfangene Identifikationskennung und die empfangenen Registrierungsdaten angelegt. Weiterhin wird der private Schlüssel des Nutzers abgespeichert und es wird eine Nutzeridentifikationskennung 23 erzeugt. Die Nutzeridentifikationskennung 23 wird mit dem öffentlichen Schlüssel des Nutzers verschlüsselt und über einen Kommunikationskanal, beispielsweise den Kommunikationskanal 22 des ersten Kommunikationsnetzes 10, an das Endgerät des Nutzers geschickt. Im Nutzermodul 14 werden die vom Anbieter 16 empfangenen Informationen mit dem privaten Schlüssel des Nutzers entschlüsselt, und die Nutzeridentifikationskennung wird im Nutzermodul 14 abgespeichert.

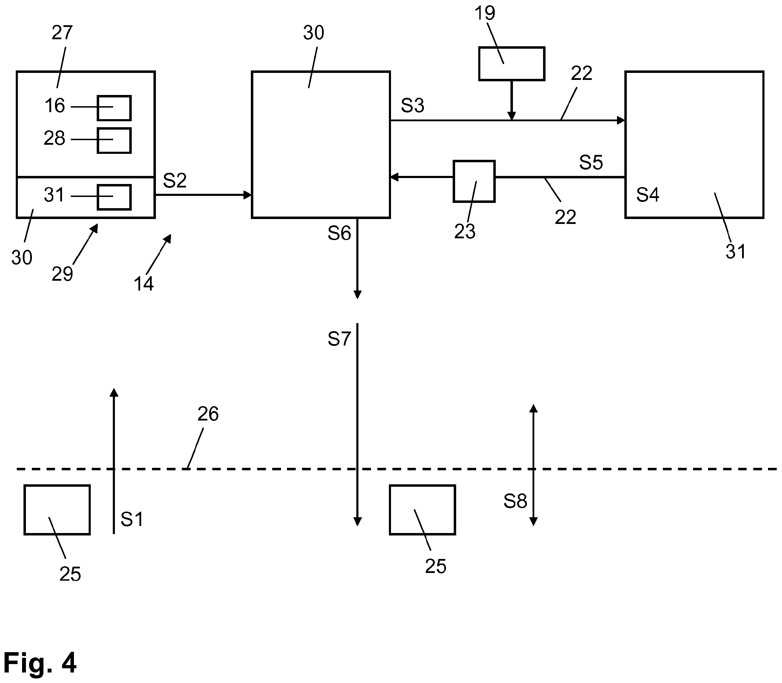

In Figur 4 ist ein Ausführungsbeispiel dargestellt, bei dem ein neuer Anbieter auf dem Endgerät eines Nutzers implementiert wird. Über eine Applikation 25, die im Endgerät des Nutzers implementiert ist, kann dieser beispielsweise ins Internet gehen und Angebote verschiedener Anbieter abfragen. Findet er dabei das Angebot eines Anbieters, für den der Nutzer noch kein Nutzerkonto und keine Nutzeridentifikationskennung hat, greift die Applikation 25 in einem Verfahrensschritt S1 über eine Schnittstelle 26, bei der es sich beispielsweise um eine API handeln kann, auf ein im Endgerät vorgesehenes Nutzermodul 14 zu, das beispielsweise als SIM-Applikation ausgebildet sein kann. Dabei startet die Applikation 25 eine Anbieter-Administrations-GUI 29. Über das Nutzermodul 14 wird auf eine Speichereinrichtung 27 zugegriffen, in der bereits einige Anbieter 16, 28 mit entsprechenden Nutzeridentifikationskennungen für den Nutzer und weiteren, Anbieter spezifischen Informationen abgelegt sind. Diese werden auf der Anbieter-Administrations-GUI 29 angezeigt. Weiterhin ist auf der Anbieter-Administrations-GUI 29 ein Bereich zur Eingabe weiterer Anbieter 30 vorgesehen
In einem Verfahrensschritt S2 wird der Bereich zur Eingabe weiterer Anbieter 30 aktiviert, und es werden Registrierungsdaten erzeugt. Hierbei handelt es sich beispielsweise um den Namen des Nutzers, den Login des Nutzers, das Passwort des Nutzers und die Bankverbindungsdaten des Nutzers.

In einem weiteren Verfahrensschritt S3 werden die Registrierungsdaten und der öffentliche Schlüssel des Nutzers vom Nutzermodul 14 an einen neuen Anbieter 31 übertragen, was über einen dem ersten Kommunikationsnetz zugeordneten Kommunikationskanal 22 erfolgt. Der Betreiber des ersten Kommunikationsnetzes kann dabei die zu übertragenden Daten mit einer den Nutzer eindeutig identifizierenden Identifikationskennung 19, beispielsweise die MSISDN, anreichen und die Daten somit entsprechend injizieren. Nach Erhalt der Daten erzeugt der Anbieter 31 in einem Verfahrensschritt S4 eine Nutzeridentifikationskennung 23, beispielsweise einen so genannten Account Key, optional auch ein Nutzerkonto, wobei die Nutzeridentifikationskennung 23 in diesem Fall Bestandteil des Nutzerkontos ist. Dazu werden auf Seite des Anbieters 31 die empfangenen Daten mit dem privaten Schlüssel des Anbieters 31 entschlüsselt. Es wird ein Nutzerkonto für die empfangene Identifikationskennung 19 und die empfangenen Registrierungsdaten angelegt. Weiterhin wird der öffentliche Schlüssel des Nutzers abgespeichert und es wird eine Nutzeridentifikationskennung 23 erzeugt. Die Nutzeridentifikationskennung 23 wird mit dem öffentlichen Schlüssel des Nutzers verschlüsselt und über einen Kommunikationskanal, beispielsweise den Kommunikationskanal 22 des ersten Kommunikationsnetzes 10, in einem Verfahrensschritt S5 an das Endgerät des Nutzers geschickt und im Nutzermodul 14 abgelegt, wobei gleichzeitig auch der öffentliche Schlüssel des Anbieters 31 mit übertragen wird. Im Nutzermodul 14 werden in einem Verfahrensschritt S6 die vom Anbieter 31 empfangenen Informationen mit dem privaten Schlüssel des Nutzers entschlüsselt, validiert und die Nutzeridentifikationskennung beziehungsweise das Nutzerkonto wird im Nutzermodul 14 abgespeichert. Nun ist der neue Anbieter 31 aktiviert, was durch die gestrichelte Darstellung verdeutlicht ist..

In einem Verfahrensschritt S7 wird das Nutzermodul 14 geschlossen und es wird zur Applikation 25 zurückgekehrt. Nun kann über die Schnittstelle 26 in einem Verfahrensschritt S8 der gewünschte, neu angelegte Anbieter 31 ausgewählt werden, da für diesen nunmehr eine Nutzeridentifikationskennung des Nutzers zur Verfügung steht.

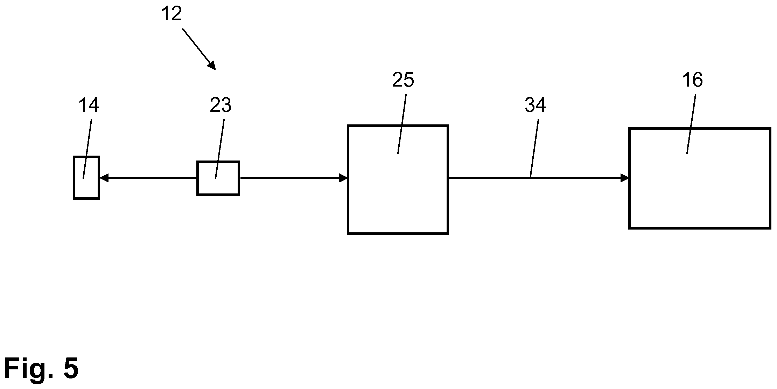

In Figur 5 ist in allgemein schematischer Darstellung dargestellt, wie ein Verfahren zur Durchführung einer Transaktion zwischen einem Nutzer und einem Anbieter 16 durchgeführt wird. Dem Nutzer ist ein Endgerät 12 zugeordnet, welches ein Nutzermodul 14, beispielsweise eine SIM-Applikation 14 und eine Applikation 25 zur Durchführung von Transaktionen aufweist. Die Applikation 25 liest die Nutzeridentifikationskennung 23 aus dem Nutzermodul aus. Dabei ist insbesondere vorgesehen, dass die Nutzeridentifikationskennung kommunikationsnetzunabhängig ist. Danach überträgt die Applikation eine Anfrage, beispielsweise eine Abrechnungsanfrage mit der Nutzeridentifikationskennung an den Anbieter 16, beispielsweise einen Abrechnungsanbieter. Dies geschieht beispielsweise über einen Kommunikationskanal 34 eines zweiten Kommunikationsnetzes, beispielsweise eines WLAN/LAN über DSL-Netzes. Dabei ist keine Anreicherung mit einer Identifikationskennung, beispielsweise einer MSISDN, mehr erforderlich, da die Nutzeridentifikationskennung gemäß einem Verfahren, das in den Figuren 1 bis 4 dargestellt und beschrieben ist, zuvor erzeugt worden ist und somit ein eindeutiges Identifizierungsmittel darstellt. Dabei ist es egal, ob das Endgerät 12 des Nutzers mit dem Anbieter 16 über ein erstes Kommunikationsnetz, beispielsweise ein Mobilfunknetz, oder ein zum ersten Kommunikationsnetz unterschiedliches zweites Kommunikationsnetz, beispielsweise eine WLAN, LAN oder DSL-Situation, insbesondere eine WLAN/LAN über DSL Situation, kommuniziert. Die Nutzeridentifikationskennung, die im Zusammenhang mit dem ersten Kommunikationsnetz erstellt wurde, hat auch Gültigkeit im zweiten Kommunikationsnetz.

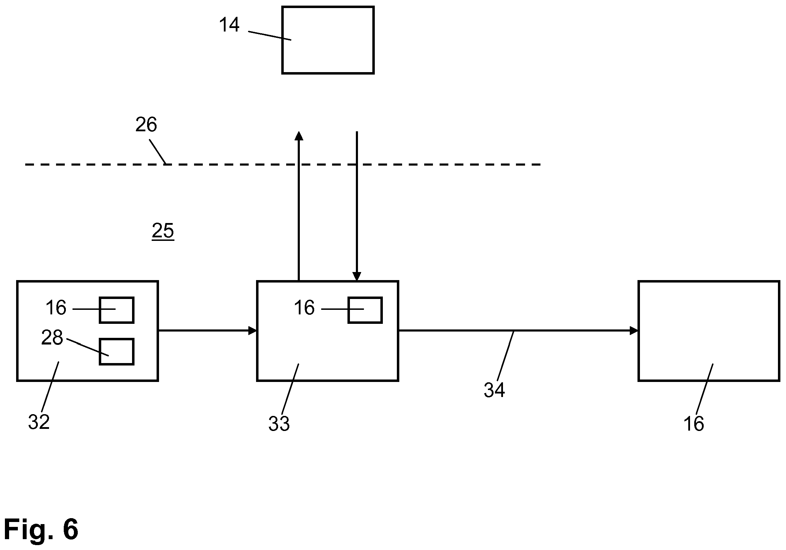

In Figur 6 ist ein Verfahren zur Durchführung einer Transaktion zwischen einem Nutzer und einem Anbieter 16 dargestellt, wobei das Verfahren aus Sicht einer im Endgerät implementierten Applikation 25 beschrieben ist, wobei die Applikation 25 über eine Schnittstelle 26 mit einem im Endgerät ebenfalls vorgesehenen Nutzermodul 14, beispielsweise einer SIM mit SIM-Applikation, kommuniziert
Die Applikation 25 weist eine Liste 32 mit verschiedenen Anbietern 16, 28 auf. Die Applikation 25 matcht die Liste 32 mit einer Liste 33, die bevorzugte Anbieter beinhaltet, wobei beispielsweise der Anbieter 16 übrig bleibt. Über die Schnittstelle 26 kommuniziert die Applikation 25 nun mit dem Nutzermodul 14, um die erforderlichen Daten, beispielsweise die Nutzeridentifikationskennung 23, die als kommunikationsnetzunabhängige Nutzeridentifikationskennung ausgebildet ist, für den Nutzer bei Anbieter 16 auszulesen und verschiedene Daten zu verschlüsseln. Über einen Kommunikationskanal 34 eines zweiten Kommunikationsnetzes wird eine Anfrage von der Applikation 25 an den Anbieter 16 geschickt, wobei die Anfrage Transaktionsdaten und die Netzwerkidentifikationskennung des Nutzers beim Anbieter 16 enthält, wobei zumindest einzelne Teile der Daten, insbesondere die Nutzeridentifikationskennung, verschlüsselt sind.

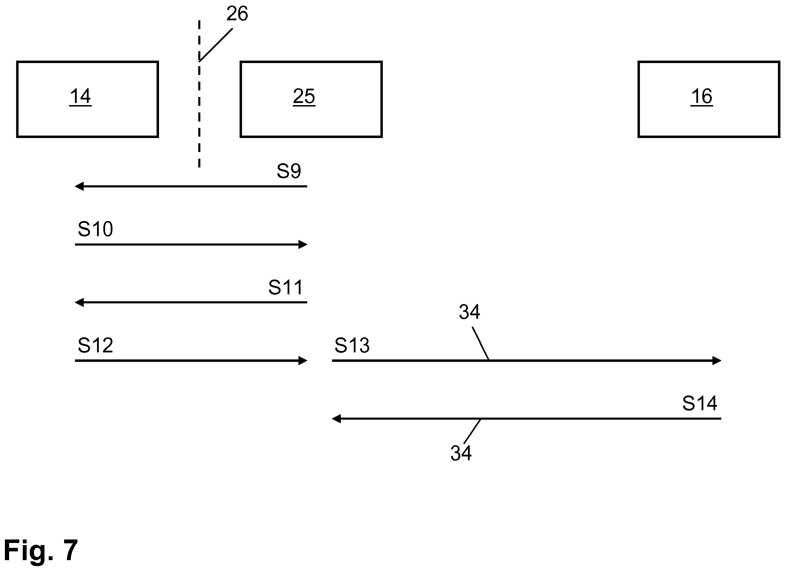

In Figur 7 schließlich ist eine schematische Darstellung auf Basis von den Figuren 5 und 6 gezeigt, aus der der Fluss der Verschlüsselungs-Schlüssel ersichtlich wird. Wiederum ist die Kommunikation zwischen der Applikation 25, dem Nutzermodul 14 und dem Anbieter 16 gezeigt.

Die Applikation 25 greift in einem Verfahrensschritt S9 über die Schnittstelle 26 auf das Nutzermodul 14 zu. Das Nutzermodul schickt in einem Verfahrensschritt S10 eine Liste von Nutzeridentifikationskennungen, die mit den öffentlichen Schlüssel der jeweiligen Anbieter verschlüsselt sind, an die Applikation 25 zurück. Der Nutzer wählt über die Applikation 25 anschließend einen geeigneten Anbieter aus, im vorliegenden Beispiel den Anbieter 16. Über die Schnittstelle 26 werden in einem Verfahrensschritt S11 dann die von der Applikation 25 erzeugten Transaktionsdaten an das Nutzermodul 14 übertragen und dort verschlüsselt. Die verschlüsselten Transaktionsdaten, die mit dem öffentlichen Schlüssel des Anbieters 16 verschlüsselt wurden, werden in einem Verfahrensschritt S12 vom Nutzermodul 14 an die Applikation 25 zurück übertragen. Dort wird eine Transaktionsanfrage erzeugt. Über einen Kommunikationskanal 34 des zweiten Kommunikationsnetzes werden die Transaktionsanfrage, die URL des Anbieters 16, und die Transaktionsdaten in einem Verfahrensschritt S13 an den Anbieter 16 übertragen, wobei alle Daten mit dem öffentlichen Schlüssel des Anbieters 16 verschlüsselt wurden. Auf Seiten des Anbieters 16 werden die Daten mit dem privaten Schlüssel des Anbieters 16 entschlüsselt. Die Transaktion wird durchgeführt und der Status der Transaktion wird in Form eines Statusreports in einem Verfahrensschritt S14 über den Kommunikationskanal 34 vom Anbieter 16 zurück an die Applikation 25 geschickt.

### Bezugszeichenliste

- 10: Erstes Kommunikationsnetz (Mobilfunknetz)
- 11: Erstes Kommunikationsnetz (Mobilfunknetz)
- 12: Endgerät (Mobiltelefon)
- 13: Endgerät (Mobiltelefon)
- 14: Nutzermodul (SIM-Applikation)
- 15: Nutzermodul (SIM-Applikation)
- 16: Anbieter
- 17: Rechnereinrichtung (Proxy-Server)
- 18: Rechnereinrichtung (Proxy-Server)
- 19: Identifikationskennung
- 20: Zweites Kommunikationsnetz (Internet)
- 21: Router (WLAN/DSL-Router)
- 22: Dem ersten Kommunikationsnetz zugeordneter Kommunikationskanal
- 23: Nutzeridentifikationskennung
- 24: "Over The Air (OTA)" - Empfang
- 25: Applikation
- 26: Schnittstelle
- 27: Speichereinrichtung
- 28: Anbieter
- 29: Anbieter-Administrations-GUI
- 30: Bereich zur Eingabe weiterer Anbieter
- 31: Anbieter
- 32: Liste mit Anbietern
- 33: Liste mit bevorzugten Anbietern
- 34: Kommunikationskanal des zweiten Kommunikationsnetzes

- S1: Verfahrensschritt
- S2: Verfahrensschritt
- S3: Verfahrensschritt
- S4: Verfahrensschritt
- S5: Verfahrensschritt
- S6: Verfahrensschritt
- S7: Verfahrensschritt
- S8: Verfahrensschritt
- S9: Verfahrensschritt
- S10: Verfahrensschritt
- S11: Verfahrensschritt
- S12: Verfahrensschritt
- S13: Verfahrensschritt
- S14: Verfahrensschritt

## Patentansprüche

1. Verfahren zur Initialisierung und/oder Aktivierung wenigstens eines Nutzerkontos und/oder einer Nutzeridentifikationskennung bei wenigstens einem Anbieter (16) mittels eines ersten Kommunikationsnetzes (10), insbesondere eines Mobilfunknetzes, wobei es sich bei dem Anbieter (16) um einen zum Betreiber des ersten Kommunikationsnetzes (10) unterschiedlichen Serviceanbieter oder Warenanbieter handelt, wobei es sich bei dem Nutzerkonto um einen Login bei dem Anbieter, in dem zudem das Profil des Nutzers abgelegt ist, handelt, und wobei die Nutzeridentifikationskennung eine Kennung ist, die es dem Anbieter (16) ermöglicht, den Nutzer zu identifizieren, wobei das Verfahren die folgenden Schritte aufweist:
a) über ein dem ersten Kommunikationsnetz (10) zugeordnetes Endgerät (12) wird vom Nutzer eine Anfrage zur Initialisierung und/oder Aktivierung des Nutzerkontos und/oder der Nutzeridentifikationskennung erzeugt und über einen Kommunikationskanal (22) des ersten Kommunikationsnetzes (10) vom Endgerät (12) des Nutzers zum Anbieter (16), insbesondere zumindest teilweise verschlüsselt, übertragen;
b) während der Übertragung der Anfrage wird auf Seiten des ersten Kommunikationsnetzes (10) der Anfrage eine den Nutzer und/oder das Endgerät (12) des Nutzers charakterisierende Identifikationskennung (19) zugeordnet;
c) nach Empfang der mit der Identifikationskennung (19) angereicherten Anfrage beim Anbieter wird auf Seiten des Anbieters (16) zumindest eine kommunikationsnetzunabhängige Nutzeridentifikationskennung (23) erzeugt, die in wenigstens einem weiteren, zum ersten Kommunikationsnetz (10) unabhängigen zweiten Kommunikationsnetz (20) Gültigkeit hat;
d) die erzeugte Nutzeridentifikationskennung (23) wird vom Anbieter (16) an das Endgerät (12) des Nutzers, insbesondere zumindest teilweise verschlüsselt, übertragen und in diesem abgespeichert.

2. Verfahren nach Anspruch 1, **dadurch gekennzeichnet, dass** die im Endgerät (12) des Nutzers erzeugte Anfrage an eine dem ersten Kommunikationsnetz (10) zugeordnete Rechnereinrichtung übertragen wird, dass in der Rechnereinrichtung der Anfrage die den Nutzer und/oder das Endgerät (12) des Nutzers charakterisierende Identifikationskennung (19) zugeordnet wird und dass die angereicherte Anfrage von der Rechnereinrichtung an den Anbieter (16) übertragen wird.

3. Verfahren nach Anspruch 1 oder 2, **dadurch gekennzeichnet, dass** die angereicherte Anfrage an eine dem Anbieter (16) zugeordnete Rechnereinrichtung übertragen wird, dass in der Rechnereinrichtung des Anbieters nach Empfang der angereicherten Anfrage die Nutzeridentifikationskennung (23) erzeugt wird und dass die Nutzeridentifikationskennung (23) von der Rechnereinrichtung des Anbieters an das Endgerät (12) des Nutzers, vorzugsweise über die dem ersten Kommunikationsnetz (10) zugeordnete Rechnereinrichtung, insbesondere über einen Kommunikationskanal (22) des ersten Kommunikationsnetzes (10), übertragen wird.

4. Verfahren nach einem der Ansprüche 1 bis 3, **dadurch gekennzeichnet, dass** das erste Kommunikationsnetz (10) als Mobilfunknetz ausgebildet ist und dass während der Übertragung auf Seiten des ersten Kommunikationsnetzes (10) der Anfrage eine den Nutzer und/oder das Endgerät (12) des Nutzers charakterisierende Mobile Subscriber Integrated Services Digital Network Number, MSISDN, zugeordnet wird.

5. Verfahren nach einem der Ansprüche 1 bis 4, **dadurch gekennzeichnet, dass** die Nutzeridentifikationskennung (23) in einer dem Endgerät (12) zugeordneten Speichereinrichtung (27) abgespeichert wird und dass in der Speichereinrichtung (27) darüber hinaus insbesondere auch Anbieterspezifische Daten abgespeichert sind.

6. Verfahren nach einem der Ansprüche 1 bis 5, **dadurch gekennzeichnet, dass** die Nutzeridentifikationskennung (23) in einem dem Endgerät (10) zugeordneten Nutzermodul (14), insbesondere einer Subscriber Identity Module, SIM, - oder einer SIM-Applikation oder einer Chipkarten-Applikation oder einem gesicherten Bereich im Endgerät (12) abgespeichert wird.

7. Verfahren nach Anspruch 6, **dadurch gekennzeichnet, dass** das Nutzermodul (14) eine Verschlüsselungsmaschine zum Verschlüsseln und Entschlüsseln von Daten oder zum Erzeugen von Schlüsseln zum Verschlüsseln und Entschlüsseln von Daten aufweist, und dass mittels der Verschlüsselungsmaschine zumindest Teile der Anfrage verschlüsselt werden und zumindest Teile der empfangenen Nutzeridentifikationskennung (23) entschlüsselt werden oder Schlüssel erzeugt werden, um zumindest Teile der Anfrage zu verschlüsseln und zumindest Teile der empfangenen Nutzeridentifikationskennung (23) zu entschlüsseln.

8. Verfahren nach Anspruch 6 oder 7, **dadurch gekennzeichnet, dass** das Nutzermodul (14) eine Speichereinrichtung aufweist, in der vom Nutzermodul erzeugte und/oder empfangene Daten zumindest zeitweilig abgespeichert werden.

9. Verfahren nach einem der Ansprüche 1 bis 8, **dadurch gekennzeichnet, dass** die Anfrage zur Initialisierung und/oder Aktivierung des Nutzerkontos und/oder der Nutzeridentifikationskennung von einer dem Endgerät (12) zugeordneten Applikation (25) zum Anbieter (16) übertragen wird und dass die vom Anbieter (16) erzeugte Nutzeridentifikationskennung (23) von der Applikation (25) empfangen wird.

10. Verfahren nach Anspruch 9, soweit auf einen der Ansprüche 6 bis 8 rückbezogen, **dadurch gekennzeichnet, dass** die Applikation (25) über eine Schnittstelle (26) mit dem Nutzermodul (14) kommuniziert und Daten aus dem Nutzermodul (14) ausliest und/oder auf diesem ablegt.

11. Verfahren zum Durchführen einer Transaktion, bei der es sich um einen Abschluss im Geschäftsverkehr handelt, zwischen einem, einem Nutzer zugeordneten Endgerät (12) und einem Anbieter (16), bei dem es sich um einen zum Betreiber eines ersten Kommunikationsnetzes (10) unterschiedlichen Serviceanbieter oder Warenanbieter handelt, wobei mittels des ersten Kommunikationsnetzes (10) eine Initialisierung und/oder Aktivierung wenigstens eines Nutzerkontos und/oder einer Nutzeridentifikationskennung bei dem Anbieter (16) erfolgt und wobei auf dem Endgerät (12) eine Applikation (25) zum Durchführen von Transaktionen implementiert ist, wobei zwischen dem Endgerät (12) und dem Anbieter (16), insbesondere einer dem Anbieter zugeordneten Rechnereinrichtung, über einen Kommunikationskanal (34) in einem Kommunikationsnetz (20) eine Kommunikation bezüglich der Transaktion stattfindet, wobei von der Applikation (25) in dem Endgerät (12) eine Transaktionsanfrage erzeugt und an den Anbieter (16) übertragen wird, wobei das Verfahren umfasst, dass die Applikation (25) zur Erzeugung der Transaktionsanfrage auf ein dem Endgerät (12) zugeordnetes Nutzermodul (14) zugreift;
dass aus einer dem Nutzermodul (14) zugeordneten Speichereinrichtung (27), die für die Transaktion verfügbare Anbieter (16, 28) sowie entsprechende, kommunikationsnetzunabhängige Nutzeridentifikationskennungen, die für unterschiedliche Kommunikationsnetze Gültigkeit haben, des Nutzers bei diesen Anbietern (16, 28) aufweist, von der Applikation (23) ein Anbieter (16), für den eine Nutzeridentifikationskennung (23), die es dem Anbieter (16) ermöglicht, den Nutzer zu identifizieren, vorhanden ist, ausgewählt wird, wobei die für die Transaktion verfügbaren Anbieter (16, 28) sowie entsprechende Nutzeridentifikationskennungen des Nutzers bei diesen Anbietern in der Speichereinrichtung (27) voreingestellt werden, und/oder für die Transaktion verfügbare Anbieter (16, 28) sowie entsprechende Nutzeridentifikationskennungen des Nutzers bei diesen Anbietern mittels eines Verfahrens nach einem der Ansprüche 1 bis 10 erzeugt und in der Speichereinrichtung (27) abgespeichert werden;
dass die Applikation (25) die Nutzeridentifikationskennung (23) des Anbieters (16) aus der dem Nutzermodul (14) zugeordneten Speichereinrichtung ausliest,
dass die Nutzeridentifikationskennung (23) in der Applikation (25) der Transaktionsanfrage hinzugefügt wird;
dass die mit der Nutzeridentifikationskennung (23) angereicherte Transaktionsanfrage von der Applikation (25) des Endgeräts (12) an den Anbieter (16) übertragen wird;
dass auf Seiten des Anbieters (16) die Nutzeridentifikationskennung (23) verifiziert wird; und
dass bei erfolgreicher Verifikation die Transaktion durchgeführt wird.

12. Verfahren nach Anspruch 11, **dadurch gekennzeichnet, dass** das Nutzermodul (14) eine Subscriber Identity Module, SIM, - oder eine SIM-Applikation oder eine Chipkarten-Applikation oder eine gesicherte Speichereinrichtung im Endgerät (12) ist.

13. Verfahren nach einem der Ansprüche 11 oder 12, **dadurch gekennzeichnet, dass** das Nutzermodul (14) eine Verschlüsselungsmaschine zum Verschlüsseln und Entschlüsseln von Daten oder zum Erzeugen von Schlüsseln zum Verschlüsseln und Entschlüsseln von Daten aufweist, und dass mittels der Verschlüsselungsmaschine zumindest Teile der Transaktionsanfrage verschlüsselt werden und zumindest Teile der empfangenen Daten des Anbieters (16) entschlüsselt werden.

14. Endgerät (12), welches einem ersten Kommunikationsnetz (10), insbesondere einem Mobilfunknetz, zugeordnet ist und eine Kommunikationsverbindung auch zu einem zweiten, zum ersten Kommunikationsnetz (10) unterschiedlichen Kommunikationsnetz (20), aufbauen kann, und welches Mittel zur Durchführung des Verfahrens nach einem der Ansprüche 1 bis 13 aufweist, aufweisend ein Nutzermodul (14) mit einer Speichereinrichtung, in der für Transaktionen verfügbare Anbieter (16, 28), bei denen es sich um zum Betreiber des ersten Kommunikationsnetzes (10) unterschiedliche Serviceanbieter oder Warenanbieter handelt, sowie entsprechende, kommunikationsnetzunabhängige Nutzeridentifikationskennungen, die in dem zum ersten Kommunikationsnetz (10) unabhängigen zweiten Kommunikationsnetz (20) Gültigkeit haben, des Nutzers bei diesen Anbietern (16, 28) abgespeichert sind, eine Applikation (25) zur Initialisierung und/oder Aktivierung wenigstens eines Nutzerkontos, bei dem es sich um einen Login bei einem Anbieter, in dem zudem das Profil des Nutzers abgelegt ist, handelt, bei wenigstens einem Anbieter (16) und/oder zum Durchführen einer Transaktion, bei der es sich um einen Abschluss im Geschäftsverkehr handelt, zwischen dem Endgerät (12) und einem Anbieter (16), eine Schnittstelle (26) zum Datenaustausch zwischen dem Nutzermodul (14) und der Applikation (25) sowie eine Schnittstelle zum Datenaustausch zwischen dem Endgerät (12), insbesondere der Applikation (25) und einem Anbieter (16), insbesondere einer einem Anbieter zugeordneten Rechnereinrichtung.

## Claims

1. Method for initializing and/or activating at least one user account and/or a user identifier with at least one provider (16) by means of a first communications network (10), in particular a mobile network, wherein the provider (16) is a service provider or a goods provider different to the operator of the first communications network (10), wherein the user account is a login at the provider, which additionally contains the profile of the user, and wherein the user identifier is an identifier, which enables the provider (16) to identify the user, wherein the method comprises the following steps:
a) a request for initializing and/or activating the user account and/or the user identifier is generated by the user via a terminal device (12) assigned to the first communications network (10), and is transmitted via a communication channel (22) of the first communications network (10 from the terminal device (12) of the user to the provider (16), in particular at least partially encrypted;
b) during the transmission of the request, an identifier (19) characterizing the user and/or the terminal device (12) of the user is assigned to the request at the first communications network's (10) side;
c) after receipt of the request complemented by the identifier (19) at the provider, at least one user identifier (23) being independent from a communications network is generated at the provider's (16) side; said generated user identifier being valid for at least one further second communications network (20) being independent to the first communications network (10);
d) the generated user identifier (23) is transmitted from the provider (16) to an terminal device (12) of the user, in particular at least partially encrypted, and is stored therein.

2. Method according to claim 1, **characterized in that** the request generated in the terminal device (12) of the user is transmitted to a computer device assigned to the first communications network (10), **in that** in the computer device, the identifier (19) characterizing the user and/or the terminal device (12) of the user is assigned to the request, and **in that** the complemented request is transmitted from the computer device to the provider (16).

3. Method according to claim 1 or 2, **characterized in that** the complemented request is transmitted to a computer device assigned to the provider (16), **in that** the user identifier (23) is generated in the computer device of the provider after receiving the complemented request, and **in that** the user identifier (23) is transmitted from the computer device of the provider to the terminal device (12) of the user, preferably via the computer device assigned to the first communications network (10), in-particular via a communication channel (22) of the first communications network (10).

4. Method according to anyone of claims 1 to 3, **characterized in that** the first communications network (10) is formed as a mobile network and **in that** during the transmission, an Mobile Subscriber Integrated Services Digital Network Number, MSISDN, characterizing the user and/or the terminal device (12) of the user is assigned to the request on the side of the first communications network (10).

5. Method according to anyone of claims 1 to 4, **characterized in that** the user identifier (23) is stored in a storage device (27) assigned to the terminal device (12) and **in that** data that are specific for the provider are also stored particularly in the storage device (27).

6. Method according to anyone of claims 1 to 5, **characterized in that** the user identifier (23) is stored in a user module (14) which is assigned to the terminal device (12), in particular wherein the user module is a SIM or a SIM application or a chip card application or a secure region in the terminal device (12).

7. Method according to claim 6, **characterized in that** the user module (14) has an encryption machine for encrypting and decrypting data or for generating keys for encrypting and decrypting data, and **in that** by means of the encrypting machine at least portions of the request are encrypted and at least portions of the received user identifier (23) are decrypted or keys are generated in order to encrypt at least portions of the request and to decrypt at least portions of the received user identifier (23).

8. Method according to claim 6 or 7, **characterized in that** the user module (14) comprises a storage device, in which data generated and/or received by the user module are stored at least temporarily.

9. Method according to anyone of claims 1 to 8, **characterized in that** the request for initializing and/or activating the user account and/or the user identifier will be transmitted to the provider (16) by an application (25) assigned to the terminal device (12), and **in that** the user identifier (23) generated by the provider (16) will be received by the application (25).

10. Method according to claim 9, as far as being dependent on one of claims 6 to 8, **characterized in that** the application (25) communicates with the user module (14) via an interface (26) and reads out data from the user module (14) and/or stores data in it.

11. Method for carrying out a transaction, which is a settlement in business transactions, between a terminal device (12) assigned to a user and a provider (16), wherein the provider (16) is a service provider or a goods provider different to the operator of a first communications network (10), wherein, by means of the first communications network (10), an initialization and/or activation of at least one user account and/or user identifier at the provider (16) is performed, and wherein an application (25) for performing transactions is implemented on the terminal device (12), wherein, a communication relating to the transaction takes place in a communications network (20) via a communication channel (34) between the terminal device (12) and the provider (16), in particular a computer device assigned to the provider, wherein a transaction request is generated by the application (25) in the terminal device (12) and is transmitted to the provider)16), wherein the method comprises:
that the application (25) accesses a user module (14) assigned to the terminal device (12) for generating the transaction request;
that from a storage device (27) that is assigned to the user module (14), the storage device containing the providers (16, 28) available for the transaction as well as corresponding user identifiers being independent from any communications network and being valid for different communications networks of the user at these providers (16, 28), a provider (16) is selected by the application (25), for which a user identifier (23) exists that enables the provider (16) to identify the user;
wherein providers (16, 28) being available for the transaction as well as respective user identifiers of the user at theses providers are pre-installed in the storage device (27), and/or providers (16, 28) being available for the transaction as well as respective user identifiers of the user at theses providers are generated with a method according to anyone of claims 1 to 10 and are stored in the storage device (27);
that the application (25) reads-out the user identifier (23 of the provider (16) from the storage device assigned to the user module (14);
that the user identifier (23) is added to the transaction request in the application (25);
that, by the application (25) of the terminal device (12), the transaction request with the added user identifier (23) is transmitted to the provider (16);
that the user identifier (23) is verified on the part of the provider (16); and
that, upon successful verification, the transaction is carried out..

12. Method according to claim 11, **characterized in that** the user module (14) is a Subscriber Identity Module, SIM, or a SIM application or a chip card application or a secure storage device in the terminal device (12).

13. Method according to claim 11 or 12, **characterized in that** the user module (14) comprises an encryption machine for encrypting and decrypting data or for generating keys for encrypting and decrypting data, and **in that** at least portions of the transaction request are encrypted by means of the encryption machine, and at least portions of the received data of the provider (16) are decrypted by means of the encryption machine.

14. Terminal device (12), which assigned to a first communications network (10, in particular a mobile network, and which is capable of also establishing a communication connection to a second communications network (20) being different to the first communications network (10), and which comprises means for performing the method according to anyone of claims 1 to 13, comprising a user module (14) with a storage device, in which providers (16, 28) are available for transactions, wherein the providers (16) are service providers or goods providers different to the operator of a first communications network (10), as well as corresponding user identifiers being independent from any communications network and being valid for the second communications network (20) being different to the first communications network (10) of the user at these providers (16, 28) are stored, an application (25) for initialization and/or activation of at least one user account being a login at a provider which additionally contains the profile of the user, a at least one provider (16) and/or for performing a transaction, which is a settlement in business transactions, between the terminal device (12) and a provider (16), an interface (26) for data exchange between the user module (14) and the application (25) as well as an interface for data exchange between the terminal device (12), in particular the application (25), and a provider (16) in particular a computer device assigned to a provider.

## Revendications

1. Procédé d'initialisation et/ou d'activation d'au moins un compte utilisateur et/ou un code d'identification d'utilisateur auprès d'au moins un fournisseur (16) au moyen d'un premier réseau de communication (10), en particulier un réseau de téléphonie mobile, dans lequel le fournisseur (16) est un fournisseur de services ou un fournisseur de biens différent de l'opérateur du premier réseau de communication (10), dans lequel il s'agit pour le compte utilisateur d'une demande de connexion auprès du fournisseur dans laquelle est déposé le profil de l'utilisateur, et dans lequel le code d'identification d'utilisateur est un code qui permet au fournisseur (16) d'identifier l'utilisateur, le procédé comprenant les étapes suivantes :
a) via un terminal (12) affecté au premier réseau de communication (10), une demande d'initialisation et/ou d'activation du compte utilisateur et/ou du code d'identification d'utilisateur est générée par l'utilisateur et est transmise, en particulier de manière au moins partiellement chiffrée, par l'intermédiaire d'un canal de communication (22) du premier réseau de communication (10) du terminal (12) de l'utilisateur au fournisseur (16) ;
b) pendant la transmission de la demande, la demande reçoit de la part du premier réseau de communication (10) un code d'identification (19) caractérisant l'utilisateur et/ou le terminal (12) de l'utilisateur ;
c) après réception de la demande enrichie du code d'identification (19) auprès du fournisseur, au moins un code d'identification d'utilisateur (23) indépendant du réseau de communication est généré de la part du fournisseur (16), lequel est valide dans au moins un autre second réseau de communication (20) indépendant du premier réseau de communication (10) ;
d) le code d'identification d'utilisateur généré (23) est transmis, en particulier de manière au moins partiellement chiffrée, du fournisseur (16) au terminal (12) de l'utilisateur et sauvegardé dans celui-ci.

2. Procédé selon la revendication 1, **caractérisé en ce que** la demande générée dans le terminal (12) de l'utilisateur est transmise à un dispositif informatique affecté au premier réseau de communication (10), **en ce que** le code d'identification (19) caractérisant l'utilisateur et/ou le terminal (12) de l'utilisateur est affecté à la demande dans le dispositif informatique, et **en ce que** la demande enrichie est transmise du dispositif informatique au fournisseur (16).

3. Procédé selon la revendication 1 ou 2, **caractérisé en ce que** la demande enrichie est transmise à un dispositif informatique affecté au fournisseur (16), **en ce que** le code d'identification d'utilisateur (23) est généré dans le dispositif informatique du fournisseur après réception de la demande enrichie, et **en ce que** le code d'identification d'utilisateur (23) est transmis du dispositif informatique du fournisseur au terminal (12) de l'utilisateur, de préférence par l'intermédiaire du dispositif informatique affecté au premier réseau de communication (10), en particulier par l'intermédiaire d'un canal de communication (22) du premier réseau de communication (10).

4. Procédé selon l'une quelconque des revendications 1 à 3, **caractérisé en ce que** le premier réseau de communication (10) est conçu comme un réseau de téléphonie mobile et **en ce que**, pendant la transmission depuis le premier réseau de communication (10), la demande reçoit un « Mobile Subscriber Integrated Services Digital Network Number » (MSISDN) caractérisant l'utilisateur et/ou le terminal (12) de l'utilisateur.

5. Procédé selon l'une quelconque des revendications 1 à 4, **caractérisé en ce que** le code d'identification d'utilisateur (23) est sauvegardé dans un dispositif de mémoire (27) affecté au terminal (12) et **en ce qu'**en particulier des données spécifiques au fournisseur sont en outre sauvegardées dans le dispositif de mémoire (27).

6. Procédé selon l'une quelconque des revendications 1 à 5, **caractérisé en ce que** le code d'identification d'utilisateur (23) est sauvegardé dans un module utilisateur (14) affecté au terminal (12), en particulier un « Subscriber Identity Module » (SIM) ou une application SIM ou une application de cartes à puce ou une zone sécurisée dans le terminal (12).

7. Procédé selon la revendication 6, **caractérisé en ce que** le module utilisateur (14) comporte une machine de cryptage pour le cryptage et le décryptage de données ou pour la génération de clés pour le cryptage et le décryptage de données, et **en ce qu'**au moins des parties de la demande sont chiffrées au moyen de la machine de cryptage et au moins des parties du code d'identification d'utilisateur (23) reçu sont déchiffrées ou des clés sont générées afin de chiffrer au moins des parties de la demande et de déchiffrer au moins des parties du code d'identification d'utilisateur (23) reçu.

8. Procédé selon la revendication 6 ou 7, **caractérisé en ce que** le module utilisateur (14) comporte un dispositif de mémoire dans lequel les données générées et/ou reçues par le module utilisateur sont sauvegardées au moins temporairement.

9. Procédé selon l'une quelconque des revendications 1 à 8, **caractérisé en ce que** la demande d'initialisation et/ou d'activation du compte utilisateur et/ou du code d'identification d'utilisateur est transmise d'une application (25) affectée au terminal (12) au fournisseur (16) et **en ce que** le code d'identification d'utilisateur (23) généré par le fournisseur (16) est reçu par l'application (25).

10. Procédé selon la revendication 9, dans la mesure où il se rapporte à l'une quelconque des revendications 6 à 8, **caractérisé en ce que** l'application (25) communique avec le module utilisateur (14) par l'intermédiaire d'une interface (26) et lit des données du module utilisateur (14) et/ou les stocke sur celui-ci.

11. Procédé pour effectuer une transaction, qui est une transaction commerciale, entre un terminal (12) affecté à un utilisateur et un fournisseur (16) qui est un fournisseur de services ou un fournisseur de biens différent de l'opérateur d'un premier réseau de communication (10), dans lequel une initialisation et/ou activation d'au moins un compte utilisateur et/ou d'un code d'identification d'utilisateur auprès du fournisseur (16) est effectuée au moyen du premier réseau de communication (10) et dans lequel une application (25) pour effectuer des transactions est mise en œuvre sur le terminal (12),
dans lequel une communication concernant la transaction a lieu entre le terminal (12) et le fournisseur (16), en particulier un dispositif informatique affecté au fournisseur, par l'intermédiaire d'un canal de communication (34) dans un réseau de communication (20), dans lequel une demande de transaction est générée par l'application (25) dans le terminal (12) et transmise au fournisseur (16), le procédé comprenant les étapes suivantes :
l'accès de l'application (25) à un module utilisateur (14) affecté au terminal (12) pour générer la demande de transaction ;
la sélection à partir d'un dispositif de mémoire (27) affecté au module utilisateur (14), comprenant les fournisseurs (16, 28) disponibles pour la transaction ainsi que les codes d'identification d'utilisateur correspondants indépendants du réseau de communication - qui sont valables pour différents réseaux de communication - de l'utilisateur pour ces fournisseurs (16, 28), par l'application (25) d'un fournisseur (16) pour lequel il existe un code d'identification d'utilisateur (23) qui permet au fournisseur (16) d'identifier l'utilisateur,
dans lequel les fournisseurs (16, 28) disponibles pour la transaction ainsi que les codes d'identification d'utilisateur correspondants de l'utilisateur pour ces fournisseurs sont prédéfinis dans le dispositif de mémoire (27), et/ou les fournisseurs (16, 28) disponibles pour la transaction ainsi que les codes d'identification d'utilisateur correspondants de l'utilisateur pour ces fournisseurs sont générés au moyen d'un procédé selon l'une quelconque des revendications 1 à 10 et sauvegardés dans le dispositif de mémoire (27) ;
la lecture par l'application (25) du code d'identification d'utilisateur (23) du fournisseur (16) à partir du dispositif de mémoire affecté au module utilisateur (14),
l'ajout du code d'identification d'utilisateur (23) dans l'application (25) de la demande de transaction ;
la transmission de la demande de transaction enrichie du code d'identification d'utilisateur (23) de l'application (25) du terminal (12) au fournisseur (16) ;
la vérification de la part du fournisseur (16) du code d'identification d'utilisateur (23) ; et
l'exécution de la transaction en cas de vérification concluante.

12. Procédé selon la revendication 11, **caractérisé en ce que** le module utilisateur (14) est un « Subscriber Identity Module » (SIM) ou une application SIM ou une application de cartes à puce ou un dispositif de mémoire sécurisé dans le terminal (12).

13. Procédé selon l'une quelconque des revendications 11 ou 12, **caractérisé en ce que**
le module utilisateur (14) comporte une machine de cryptage pour le cryptage et le décryptage de données ou pour la génération de clés pour le cryptage et le décryptage de données, et **en ce qu'**au moyen de la machine de cryptage, au moins des parties de la demande de transaction sont chiffrées et au moins des parties des données reçues du fournisseur (16) sont déchiffrées.

14. Terminal (12) qui est affecté à un premier réseau de communication (10), en particulier à un réseau de téléphonie mobile, et qui peut également établir une liaison de communication avec un deuxième réseau de communication (20) différent du premier réseau de communication (10), et qui comporte des moyens pour mettre en œuvre le procédé selon l'une quelconque des revendications 1 à 13, avec un module utilisateur (14) comportant un dispositif de mémoire, dans lequel les fournisseurs (16, 28) disponibles pour les transactions, qui sont des fournisseurs de services ou des fournisseurs de biens différents de l'opérateur du premier réseau de communication (10), ainsi que des codes d'identification d'utilisateur correspondants indépendants du réseau de communication - qui sont valables dans le deuxième réseau de communication (20) indépendant du premier réseau de communication (10) -- de l'utilisateur sont sauvegardés auprès de ces fournisseurs (16, 28), une application (25) pour initialiser et/ou activer au moins un compte utilisateur, pour lequel il s'agit d'une demande de connexion auprès d'un fournisseur dans laquelle est déposé de plus le profil de l'utilisateur, pour au moins un fournisseur (16) et/ou pour effectuer une transaction, qui représente une transaction commerciale, entre le terminal (12) et un fournisseur (16), une interface (26) pour l'échange de données entre le module utilisateur (14) et l'application (25) ainsi qu'une interface pour l'échange de données entre le terminal (12), en particulier l'application (25) et un fournisseur (16), en particulier un dispositif informatique dédié à un fournisseur.
